Europäisches Patentamt

**European Patent Office**

Office européen des brevets

(11) Publication number: **0 086 591**
**A1**

(12) # EUROPEAN PATENT APPLICATION

(21) Application number: **83300514.3**

(22) Date of filing: **01.02.83**

(51) Int. Cl.³: **A 01 D 53/00**, A 01 C 15/02, A 01 C 7/02

(30) Priority: **10.02.82 GB 8203935**

(43) Date of publication of application: **24.08.83**
**Bulletin 83/34**

(84) Designated Contracting States: **AT BE CH DE FR GB IT LI LU NL SE**

(71) Applicant: **Allnutt, George Patrick, Mount Green Rose, Truro Cornwall (GB)**
Applicant: **Aldous, Kenneth George, 20 Trevallion Park Feock, Truro Cornwall (GB)**

(72) Inventor: **Allnutt, George Patrick, Mount Green Rose, Truro Cornwall (GB)**
Inventor: **Aldous, Kenneth George, 20 Trevallion Park Feock, Truro Cornwall (GB)**

(74) Representative: **Bryer, Kenneth Robert, Coosehecca Chacewater, Truro TR4 8QU Cornwall (GB)**

(54) **Apparatus for dispensing particulate materials.**

(57) A particulate material dispenser (11) is adapted to be mounted on a panel (12) of a machine such as a lawnmower (13) and to carry a container (41) of particulate material to be dispersed. The disperser (11) comprises a first body part (15) and a second body part (16), the first part (15) incorporates an on/off valve (31, 45) and carries the container (41), whilst the second part (16) houses a flow control nozzle (55) which can be interchanged for other such nozzles having different dimensions to adapt the dispenser for materials of different grain size. The two body parts (15, 16) can be separated by a relative twisting movement and the on/off valve (31, 45) is closed by a part of the same movement as causes the separation of the two body parts.

- 1 -

"A Particulate Material Dispenser"

The present invention relates to apparatus for dispensing particulate materials. Particularly, but not exclusively, the present invention provides a particulate material dispenser suitable for use on an agricultural or horticultural machine for the purpose of spreading particulate materials such as fertilizers or seeds.

It is well known that the even distribution of particulate materials from a hopper or storage container can frequently be detrimentally affected by clogging or jamming of the particles at points along the flow path from the hopper to the distribution point where there may for some reason be a restriction or other change in the flow path cross-section. One prior art dispenser attempts to overcome this basic problem by fitting a machine with a nozzle which flares outwardly in the direction of flow of particulate material from a hopper in communication with the nozzle, and subjecting the nozzle, in use, to vibration, which may be imparted from the operation of the machine on which the dispenser is fitted. This has been found to avoid bridging of the nozzle entrance by particles of the material to be dispensed. In this known device the storage container is connected to the nozzle by a length of flexible tubing allowing the container to be mounted on a point of the machine frame spaced from the distribution point.

This known dispenser has a number of disadvantages, among which are the fact that the range of particle

- 2 -

sizes over which it will work satisfactorily is rather limited; moreover, the nozzle is fixed to the machine and cannot be adapted to cope with particulate material other than the predetermined and rather limited range for which it is initially designed. The main application for the distributor is in the distribution of granular fertilizers, and since different manufacturers make granular fertilizers with a wide difference in grain size, this known device is in practice limited to the use of only the fertilizer for which it was initially designed. Moreover, since the vibration of the machine when running activates the dispensing action it is necessary to switch off the machine every time it is needed to leave it stationary, in order to avoid excessive dispensing of particulate material at the one point where the machine is stationary.

The present invention seeks to provide a particulate material dispenser suitable for use on an agricultural or horticultural machine which will be of simple and robust construction, and reliable in use both to dispense the particulate material freely and evenly when this is required, and to retain the particulate material without dispensing it when such dispensing is not required. The present invention also seeks to provide a dispenser in which a wide range or a plurality of ranges of particulate material can be accommodated and which, whatever the grain size or shape, will act reliably to avoid excess dispensing when the agricultural or horticultural machine on which it is fitted is stationary.

- 3 -

According to a first aspect of the present invention, there is provided a particulate material dispenser for dispensing particulate material having a grain size within a predetermined range, comprising a body having means for securing the dispenser to a panel or frame member of a machine, a flow passage extending through the body, and means for releasably attaching a container for the particulate material to the body by an attachment such that the container is substantially wholly supported on the body and an outlet opening from the container communicates with the flow passage in the body, the said flow passage being so shaped and dimensioned in relation to the particulate material within the said given range of grain size as to block the flow of particulate material therethrough except when subjected to vibration.

By fitting the body directly to a panel over the required distribution position, and by securing the hopper or container directly to the body itself the flow path from hopper to distribution point can be made short and straight so that the dispensing operation is both certain and effective. The container can be removed for refilling or for replacement with a full one.

According to a second aspect of the invention, there is provided a dispenser for dispensing particulate material within a given range of grain size in which there are provided means defining a flow passage the shape and dimensions of which are such that particulate material

- 4 -

within the said grain size is able to flow freely therethrough when it is subjected to vibration but is obstructed thereby when vibration is not applied, in which there are further provided flow control means operative selectively to permit or prevent the flow of said particulate material when vibration is applied to the apparatus. The dispenser can thus be shut off even when vibration is still being applied, for example when a machine to which the dispenser is fitted is still running.

According to a third aspect of the invention, a particulate material dispenser has means defining a flow passage therein a part of which is so shaped and dimensioned that particulate material within a given grain size range flows freely therethrough when the dispenser is vibrated, and clogs or jams therein when the dispenser is not vibrated, wherein the said part of the flow passage is formed in a removable element and there is provided at least one interchangeable element having different dimensions for use with particulate material having a different range of grain size.

Embodiments of the present invention will now be more particularly described, by way of example, with reference to the accompanying drawings, in which:

Figure 1 is a perspective view of the general arrangement of a particulate material dispenser according to the present invention fitted to a domestic lawnmower;

Figure 2 is an exploded axial section of the dispenser constituting the embodiment of the present invention;

Figure 3 is a cross section taken on the line III-III of Figure 2;

Figure 4 is an exploded perspective view, partly cut away for clarity; and

Figure 5 is a partial axial section of a second embodiment of the invention.

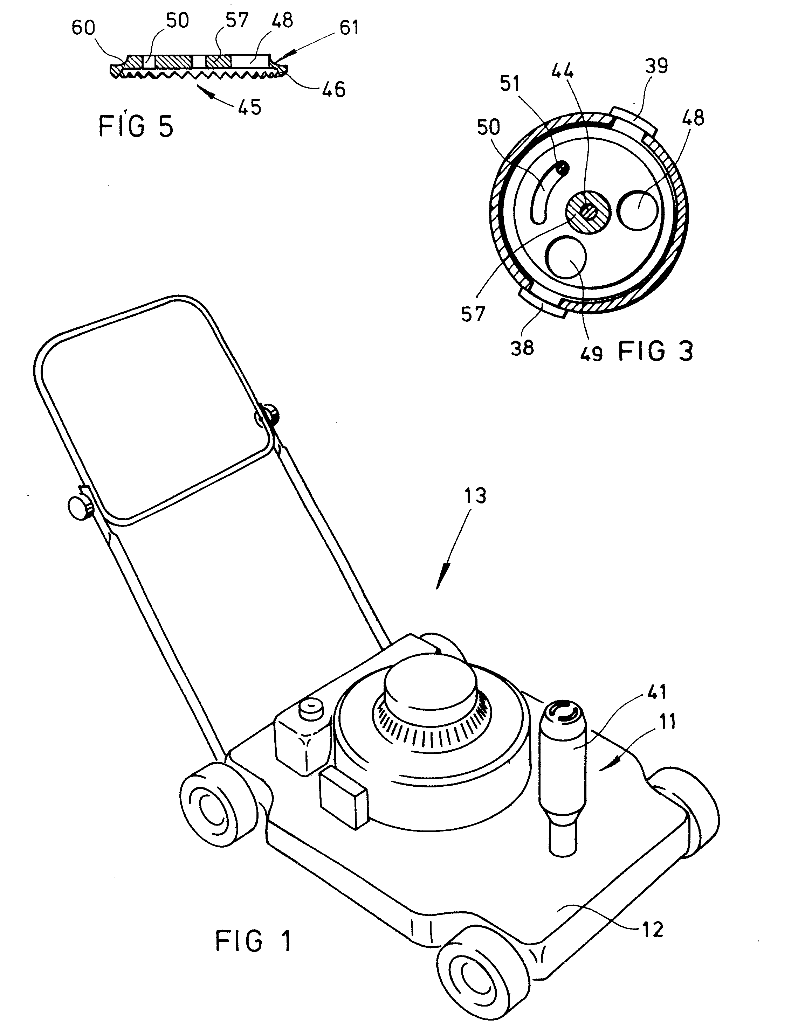

Referring now to the drawings the dispenser shown is generally indicated 11 and is adapted to be fitted on a panel or frame member such as the horizontal panel 12 covering the rotary blades of a rotary lawnmower generally indicated 13 in Figure 1. This illustration is exemplary, and the dispenser of the invention could be fitted to any suitable machine where particulate material dispensing is required. In use, vibration of the lawnmower 13 due to running of its motor is transmitted by the panel 12 to the dispenser 11 and under the action of such vibrations the dispenser allows particulate material in a container 14 attached to the dispenser 11 to flow through an internal flow passage to be distributed into the region immediately below the lawnmower base panel where, by contact with the rotating blades, it is spread over an area equivalent to the width of track of the lawnmower.

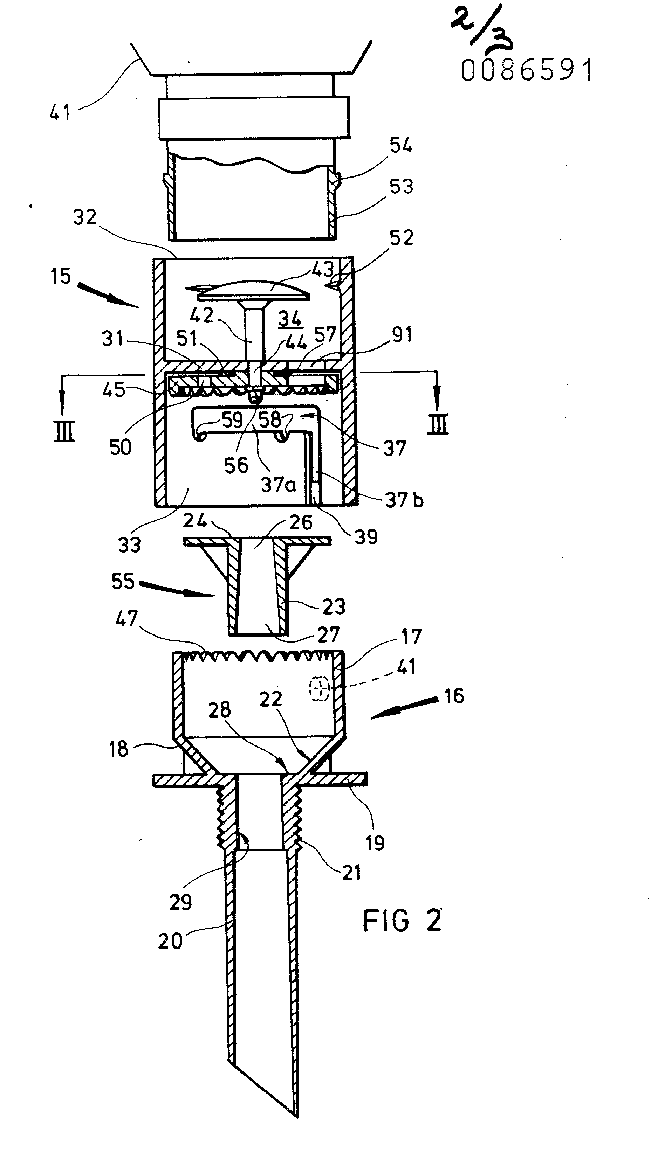

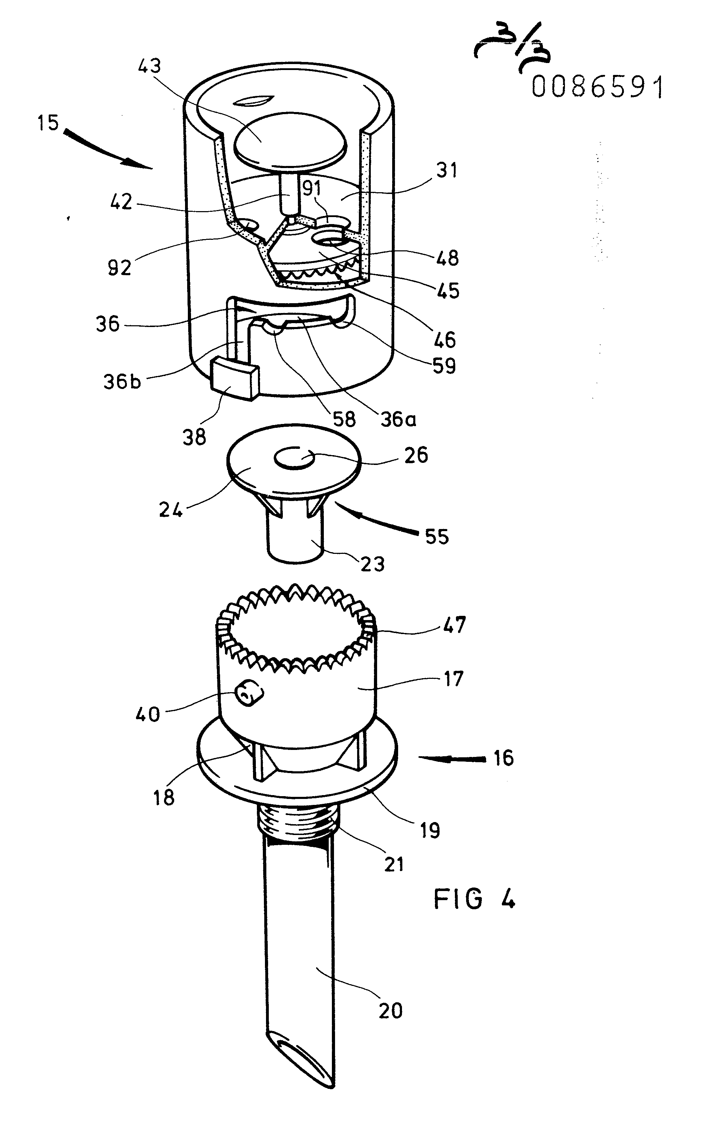

As can be seen in more detail in Figures 2 and 4, the dispenser is formed as a two part body comprising a first part 15 releasably attachable to a second part 16. The second part 16 of the dispenser body comprises a generally cylindrical wall part 17 with a conically tapered end part 18 at the narrow end of which is a transverse flange 19 from which projects a spout 20 having a threaded section 21 adjacent the flange 19. When fitted to a body panel 12 such as that illustrated in Figure 1 the spout 20 is introduced through an opening in the panel 12 and the flange 19 rests on the upper face of the panel. A threaded nut (not shown) is then screwed onto the threaded section 21 from below to clamp the second body part 16 of the dispenser to the panel 12 permanently.

Within the conically tapered end section 18 of the cylindrical wall part 17 of the body part 16 is a conically tapered surface 22. A nozzle insert 55 is housed within the cylindrical main part 17; this nozzle has a central through passage with a narrow entrance opening 26 and a wider exit opening 27 in a generally cylindrical nozzle body 23. The lower end of the nozzle body 23 rests on the horizontal annular surface 28 constituting the radially inner extension of the flange 19 as can be seen in Figure 2. The upper face of the nozzle body 23 is formed as a flat disc 24 the diameter of which is closely matched to the inner diameter of the cylindrical main part 17.

- 7 -

The first body part 15 of the dispenser fits onto the second part 16 by a bayonet coupling comprising two transversely extending spigots 40, 41 on the cylindrical wall 17 of the second body part and two L-shape slots 36, 37 in the cylindrical wall 30 of the first body part 15. These slots will be described in greater detail below.

The first body part 15 is separated into two chambers 34, 35 by a transverse wall 31 having two apertures 91, 92. The wall 31 also has a central aperture through which passes a stem 44 of a mushroom headed spreader 42 having a domed mushroom head 43. The stem 44 acts as a spindle for an apertured valve plate 45 having two apertures 48, 49 angularly spaced by the same distance as the apertures 91, 92 in the wall 31.

The valve disc 45 also has an arcuate slot 50 engaged by an axial pin 51 projecting from the wall 31. The arcuate slot 50 and pin 51 limit the angular movements of the valve disc 45 between a first position in which the apertures 48, 49 are in register with the apertures 91, 92 of the wall 31 and a position where the valve disc apertures 48, 49 are moved entirely out of register with the apertures in the wall 31. The valve disc 45 is retained by an enlargement 56 on the stem 44 so that a central boss 57 in the face of the valve disc 45 nearest the wall 31 is in contact therewith and the main body of the valve disc 45 is spaced a small distance from the wall 31 so that the disc itself can flex resiliently for reasons which will be explained in more detail below.

- 8 -

Turning movement of the disc 45 is effected by interengagement of a set of axially extending teeth 46 formed as a ring around the periphery of the disc 45 with a corresponding set of teeth 47 formed on the facing edge of the cylindrical wall 17 of the second body part 16. The teeth 46 and the teeth 47 are brought into cooperative engagement as the two body parts 15, 16 are brought together upon engagement of the spigots 40, 41 in the L-shape slots 36, 37. These slots comprise an axially extending arm 36$\underline{b}$, 37$\underline{b}$ and a circumferentially extending arm 36$\underline{a}$, 37$\underline{a}$ respectively. The open end of the axially extending arm 36$\underline{b}$, 37$\underline{b}$ is spanned by a respective block 38, 39 serving to prevent spreading of the slot.

The circumferentially extending arm 36$\underline{a}$, 37$\underline{a}$, of each slot has respective detent recesses 58, 59 a first adjacent the elbow between the two limbs of the L-shape slot and the latter at the remote end of the circum-ferential arm 36$\underline{a}$, 37$\underline{a}$. These detent notches 58, 59 serve to define the angular positions between the first and second body parts 15, 16 for the open and closed positions of the valve constituted by the wall 31 and the valve disc 45.

As will be appreciated, in normal circumstances when the valve is set up properly, turning movement of the first body part 15 with respect to the second body part 16 fixed to the panel 12 of the machine will cause closure of the valve by displacing the valve disc apertures 48, 49 out of register with the wall apertures 91, 92 by the time the first body part 15 has been turned to displace the spigots 40 to the elbow portion of the L-shape slots 36, 37 allowing subsequent axial separation of the two parts of the dispenser. In use the first body part 15 will have attached to it a container 41 in the form of a plastics bottle having a neck 53 with a circumferential ridge 54 allowing snap engagement of the bottle into cooperating inwardly directed projections 52 in the cylindrical wall 30 of the first body part. Alternatively the bottle may be provided with a screw coupling to the first body part. Whatever form this connection takes it is desirable for the valve to be closed when the first body part 15 is separated from the second body part. Should the valve become displaced from the closed position inadvertently, or due to tampering whilst it is separated from the second body part 16 the valve disc 45 will reach its open position, limited by engagement of the pin 51 in the end of the arcuate slot 50 before relative turning movement between the first body part 15 and second body part 16 has been completed, in which position the spigots 40, 41 will not be completely lodged in the detent notches 59 at the ends of the circumferential arms 36a, 37a of the L-shape slots. To allow this turning movement to continue without further turning the valve disc 45 the interengagement between the teeth 46 and the teeth 47 can be over-ridden due to flexure of the plate 45 allowing the teeth to jump over one another

0086591

- 10 -

until the spigots 40, 41 engage in the detent notches
59. The valve will then operate normally.

The tapered insert nozzle 55 illustrated in Figure 2
has a predetermined nozzle dimension suitable for
operation with particulate material of a given grain
size. Should it be desired to change the material
being dispensed, by fitting a different bottle 41,
it is a simple matter to remove the nozzle 55 after
separation of the two body parts 15, 16, and replace
it with a nozzle having different dimensions. Conveniently the nozzles will be colour coded to facilitate
identification of the dimensions. Removal of the
nozzle 55 from its seat within the second body part
16 can be effected simply by pressing one side of the
disc 24 allowing the lower part of the cylindrical
portion 23 to rock on the conical surface 22
tilting the disc 24 to allow it to be gripped then
by its opposite edge for removal.

Figure 5 illustrates an alternative disc configuration
where the boss 57 extends radially outwardly further
than in the embodiment illustrated in Figures 1 to 4
so that face-to-face contact between the disc 45 and
the wall 31 takes place in the region of the apertures
48, 49 and cooperating wall apertures 91, 92 where
in the embodiment of Figures 1 to 4 there is a small
space between the disc and the wall. Adequate flexural movement of the teeth 46 to permit the above described over-ride action is achieved by forming a suitable annular notch 61 in the periphery of the disc 45 on the face opposite that from which the teeth 46 project leaving a thin neck 60 of disc material between the main body of the disc and the teeth. This allows the outer peripheral ring of the disc to flex to permit the teeth 46 to jump over the teeth 47 if necessary without causing deformation or damage to the teeth.

Claims:

1.      A particulate material dispenser (11) for dispensing particulate material having a grain size within a predetermined range, characterised in that it comprises a body (15, 16) having means (21) for securing the dispenser to a panel (12) or frame member of a machine (13), a flow passage (26, 27, 33, 34, 48, 49, 91, 92) extending through the body, and means (52) for releasably attaching a container (41) for the particulate material to the body (15, 16) by an attachment such that the container (41) is substantially wholly supported on the body (15, 16) and an outlet opening (53) from the container communicates with the flow passage (26, 27, 33, 34, 48, 49, 91, 92) in the body, at least a part (26, 27) of the said flow passage being so shaped and dimensioned in relation to the particulate material within the said given range of grain size as to obstruct the flow of particulate material therethrough except when subjected to vibration.

2.      A particulate material dispenser as claimed in Claim 1, characterised in that it includes a container (41) for the particulate material, the container (41) having an outlet opening (53) with a lip (54) which is engageable by a cooperative retainer (52) on the said body (15, 16).

3.      A particulate material dispenser as claimed in Claim 2, characterised in that the said container (41) is of generally cylindrical form with a neck (53) surrounding the outlet opening and the said lip (54) is formed on the said neck.

4.        A particulate material dispenser as claimed in any preceding Claim, characterised in that the said body (15, 16) incorporates a flow control valve (31, 45) selectively openable or closable to permit or prevent the flow of particulate material through the flow passage (26, 27) when the dispenser is subject to vibration.

5.        A particulate material dispenser as claimed in any preceding claim, characterised in that the said body (15, 16) is formed in two releasably interconnected parts, a first part (15) incorporating the said means (52) for attaching a container (41) to the body (15, 16) and the second part (16) being adapted for attachment to the body panel (12) or frame member of the machine.

6.        A particulate material dispenser as claimed in claim 4 and claim 5, characterised in that the said first part (15) of the body incorporates the flow control valve (31, 45).

7.        A particulate material dispenser as claimed in Claim 5 or Claim 6, characterised in that the said second part (16) of the body (15, 16) houses a nozzle (55) defining the said flow passage (26, 27).

8.        A particulate material dispenser as claimed in Claim 6 or Claim 7, characterised in that the valve (31, 45) is operable by turning one of the said two body parts (15) with respect to the other (16).

9.        A particulate material dispenser as claimed
in any of Claims 5 to 8, characterised in that the said
two body parts (15, 16) are interconnected by a bayonet
coupling of the type comprising transverse pins or
spigots (40, 41) on one part and L-shape slots (36, 37)
on the other.

10.       A particulate material dispenser as claimed
in any of Claims 7, 8 or 9, characterised in that the
nozzle (55) is removably mounted in the dispenser (11)
and interchangeable with like such nozzles having
different flow passage dimensions.

11.       A particulate material dispenser as claimed
in any of Claims 4 to 10, characterised in that the flow
control valve (31, 45) includes an apertured valve
plate (45) turnable about a given axis to bring the
apertures (48, 49) therein into or out of register with
cooperating apertures (91, 92) in a fixed plate (31),
whereby to open or close the valve.

12.       A particulate material dispenser as claimed
in Claim 11, characterised in that the said apertured
valve plate (45) has one or more axially extending
abutment members (46) interengageable with cooperating
abutments (47) on the said second body part (16)
so that the plate (45) is turnable with the second body
part (16) and with respect to the first body part (15)
upon relative turning movement of the said first (15)
and second body (16) parts.

13.        A particulate material dispenser as claimed in Claim 12, characterised in that the said abutment members (46, 47) on the apertured valve plate (45) and/or on the second body part (16) comprise a ring of axially extending teeth formed thereon.

14.        A particulate material dispenser as claimed in Claim 12 or Claim 13, characterised in that there are means (50, 51) for limiting the turning movements of the apertured valve plate (45) and the cooperating abutment members (46, 47) on the apertured valve plate (45) and on the second body part (16) are so formed that they can be over-ridden if the apertured valve plate (45) reaches the end of its available range of movement before the required relative movement between the first (15) and second (16) body parts is complete.

15.        A dispenser for dispensing particulate material within a given range of grain size characterised in that there are provided means defining a flow passage (26, 27) the shape and dimensions of which are such that particulate material within the said grain size is able to flow freely therethrough when it is subjected to vibration but is obstructed thereby when vibration is not applied, in which there are further provided flow control means (31, 45) operative selectively to permit or prevent the flow of said particulate material when vibration is applied to the dispenser.

16.     A dispenser as claimed in Claim 1, characterised in that the flow control means (31, 45) comprises a
flow control valve (31, 45) operable to obstruct the
flow of particulate material when in a closed position
and to allow particulate material to flow therethrough
when in an open position.

17.     A particulate material dispenser having means
defining a flow passage (26, 27, 33, 34) therein a part
(26, 27) of which is so shaped and dimensioned that
particulate material within a given grain size range
flows freely therethrough when the dispenser is vibrated,
and clogs or jams therein when the dispenser is not
vibrated, characterised in that the said part (26, 27)
of the flow passage is formed in a removable element
(55) and there is provided at least one interchangeable element having different dimensions for use with
particulate material having a different range of grain
size.

18.     A particulate material dispenser substantially
as hereinbefore described with reference to, and as shown
in, the accompanying drawings.

FIG 5

FIG 3

FIG 1

0086591

1/3

FIG 2

FIG 4

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| A | US-A-3 081 004 (LAUGHLIN)<br><br>* Column 2, lines 3-65; column 3; column 4, lines 1-21; figures 1-7 *<br><br>--- | 1,2,4, 5,7 | A 01 D 53/00<br>A 01 C 15/02<br>A 01 C 7/02 |
| A | US-A-2 742 751 (LAUGHLIN)<br>* Column 2, lines 48-72; column 3, lines 1-32; figures 1-5 *<br><br>--- | 1 | |
| A | DE-C- 425 876 (BERNAUER)<br>* Page 2, lines 1-19; figure 1 *<br><br>--- | 1 | |
| A | DE-A-1 582 088 (SUTHON)<br><br>--- | | |
| A | US-A-2 182 878 (PIPENHAGEN)<br><br>----- | | TECHNICAL FIELDS SEARCHED (Int. Cl. ³)<br><br>A 01 D<br>A 01 C<br>B 65 D |

The present search report has been drawn up for all claims

| Place of search THE HAGUE | Date of completion of the search 19-05-1983 | Examiner VERMANDER R.H. |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82